# EUROPEAN PATENT APPLICATION

(11) **EP 4 509 710 A1**
(43) Date of publication of application: **19.02.2025**
(21) Application number: 23192133.9
(22) Date of filing: 18.08.2023
(51) Int. Cl.: F03D 9/18, F03D 13/10, F03D 13/25

(54) **OFFSHORE WIND POWERED GAS PLANT WITH HEAT STORING CAPACITY**

(71) Applicant: Siemens Gamesa Renewable Energy A/S, 7330 Brande (DK)
(72) Inventor: Scheel, Joergen, 7000 Fredericia (DK); Soerensen, Johnny, 6920 Videbaek (DK)
(74) Representative: SGRE-Association

(57) **Abstract**

The present invention relates to a system comprising a wind turbine 1 powering an operational part 8 producing excess heat when operating, wherein the system further includes a heat transferring system comprising a heat storage 20, 21, 22 in heat exchange connection to the operational part 8, and adapted to store at least a part of the excess heat produced by the operational part 8 as thermal energy in a cooling state of the heat transferring system, and to direct the thermal energy to the heat transferring system to heat the operational part 8 in a heating state when the operational part 8 is in standby.

The present invention further relates to the method to control the temperature of the operational parts 8 in standby.

## Description

### Field of invention

The invention relates to offshore wind turbine powered plants such as for hydrogen production with improved readiness for operation when the wind is back after a period of no wind and power production.

### Background

Using offshore wind turbines in power-to-X to run for example hydrogen production plants offer many benefits, such as quick supply of water, good wind conditions. The positioning of the turbines further lowers the risk of being at nuisance to inhabitants in the local area.

There are however also disadvantages. One major drawback is for wind turbines not connected to the grid (operating offgrid), when there is no wind there is no or insufficient power production to power the plants, such as electrolyzers and auxiliaries (all power requiring devices needed to operate and control the wind turbine and plant),

In this period the plants need to be ready for operation when the wind is back to get optimal availability of hydrogen or other gas production. One solution is to install a battery system to power up the plant and needed auxiliaries, this however is an expensive system, and to ensure a substantial period of time of keeping the system at operating conditions and temperature a big and expensive battery is required.

### Summary of the invention

Scope of the present invention is to provide a solution aiding the start-up of the plant after a standby period with no or insufficient wind and improve energy efficiency.

This scope is met by the subject matter according to the independent claim. Advantageous embodiments of the present invention are described by the dependent claims.

According to the invention, it includes introducing a system comprising a wind turbine 1 powering an operational part producing excess heat when operating, wherein the system further includes a heat transferring system comprising a heat storage in heat exchange connection to the operational part, and adapted to store at least a part of the excess heat produced by the operational part as thermal energy in a cooling state of the heat transferring system, and to direct the thermal energy to the heat transferring system to heat the operational part in a heating state when the operational part is in standby.

The heat storage may be positioned within the foundation of the tower and/or within the tower itself.

The heat storage may at least partly be positioned in or in contact with the ocean water.

The heat transfer may be accomplished through the circulation of a heat transferring fluid at least coming in heat exchange contact with the heat storage and operational parts.

The heat storage may comprise multiple individual heat storage tanks.

The heat storage may be positioned to be fully or at least partly submersed in water. This could be it being positioned in the ocean, or the ocean having fluid communication or access to its storage position, such as inside the tower or foundation.

The heat storage may be installed on an airtight deck below the platform, within the tower or tower foundation.

Below the airtight deck and submersed into the water may be a heat exchanger adapted to regulate the temperature within the heat storage.

The heat storage may comprise a media within to store thermal energy, such as a liquid like water, solid materials with a high capacity to maintain thermal energy for a substantial period, e.g. in the form of pebbles, granules, etc.

The present invention further relates to a method to control the temperature of operational parts powered by a wind turbine, wherein the method includes to control a heat transferring system in a cooling state where excess heat is transferred via the heat transferring system from the operational parts to a heating storage when the operational parts are in operational state, and when the operational parts are in standby, via the heat transferring system use stored thermal energy in the heat storage to heat the operational parts in a heating state.

The method may be operated on the system according to any of the previous embodiments.

The operational parts may be electrolyzers for hydrogen production.

The wind turbine may be positioned offshore, and/or not being connected to the grid. By not being connected to the grid means the transmission grid, such that it cannot drag on power from the grid during low wind periods creating insufficient power to run the operational parts and other devices like auxiliaries, the standby periods.

The method may further include to pass a heat transferring fluid between the operational parts (and/or auxiliaries or other power demanding devices) and the heating storage. The heat transferring fluid may be flowing in one direction during cooling state and the reverse direction during heating state.

The method may include to use cooling state when a temperature measured in connection with the heating storage is lower than a temperature measured in relation with the operational parts, and to use heating state when a temperature measured in connection with the heating storage is higher than a temperature measured in relation with the operational parts.

In one embodiment the heat transferring fluid passing the heat storage at a regulated rate during operation of the operational parts. Temperature sensors could be installed to measure temperature(s) within the heat storage and control the transfer of thermal energy to the heat reservoir to maintain the temperature(s) within given ranges, such as by controlling the flow of heat transferring fluid to (and from) the thermal reservoir. In an additional, or alternative, embodiment, if the temperature drops below a given minimum threshold then more thermal energy is directed to the heat storage tanks until a given temperature is reached.

During a standby period, to increase the readiness of the power demanding parts, like operational parts, auxiliaries and other devices, and of process water etc., and possible to avoid freezing during cold periods, it is most efficient to maintain the system at an operational temperature, or at least above freezing temperature. The present invention thus introduces the means and method according to any of the preceding embodiments to use thermal energy stored as heat in the heat storage to maintain the temperatures of these devices and fluid(s) during standby periods.

The present invention may further relate to a system comprising a wind turbine powering an operational part producing excess heat when operating, wherein the system further includes a heat transferring system in heat exchange connection to the operational part and adapted to transport thermal energy from the operational part to a heat exchanger submersed in the water.

By submersed in the water may mean being positioned in the ocean water or in water in direct exchange with ocean water. In this manner the ocean water forms pool to absorb heat from the heat exchanger.

The heat storage may be installed on an airtight deck below the platform, within the tower or tower foundation to store at least a part of the excess heat produced by the operational part as thermal energy in a cooling state of the heat transferring system, and to direct the thermal energy to the heat transferring system to heat the operational part in a heating state when the operational part is in standby, and where the heat transferring system further connects the heat storage to the heat exchanger to regulate the temperature within the heat storage.

This system with the heat exchanger and/or heat storage installed on an airtight deck, may further comprise the features of any of the previous embodiments and/or operating according to the method of any of the previous embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows off-shore wind turbine with a platform carrying process devices for example for hydrogen production
- Figure 2: shows a foundation section of the tower of the wind turbine containing heat storage devices according to a first embodiment of the present invention
- Figure 3: shows a foundation section of the tower of the wind turbine containing heat storage devices according to a second embodiment of the present invention where the heat storage includes boilers.
- Figure 4: shows a foundation section of the tower of the wind turbine containing heat storage devices according to a third embodiment of the present invention including a sub-water heat exchanger
- Figure 5: shows a foundation section of the tower of the wind turbine containing heat storage devices according to a fourth embodiment of the present invention where the heat storage comprises solid materials with a high capacity to maintain thermal energy.

### Detailed Description

The illustrations in the drawings are schematic. It is noted that in different figures, similar or identical elements are provided with the same reference signs.

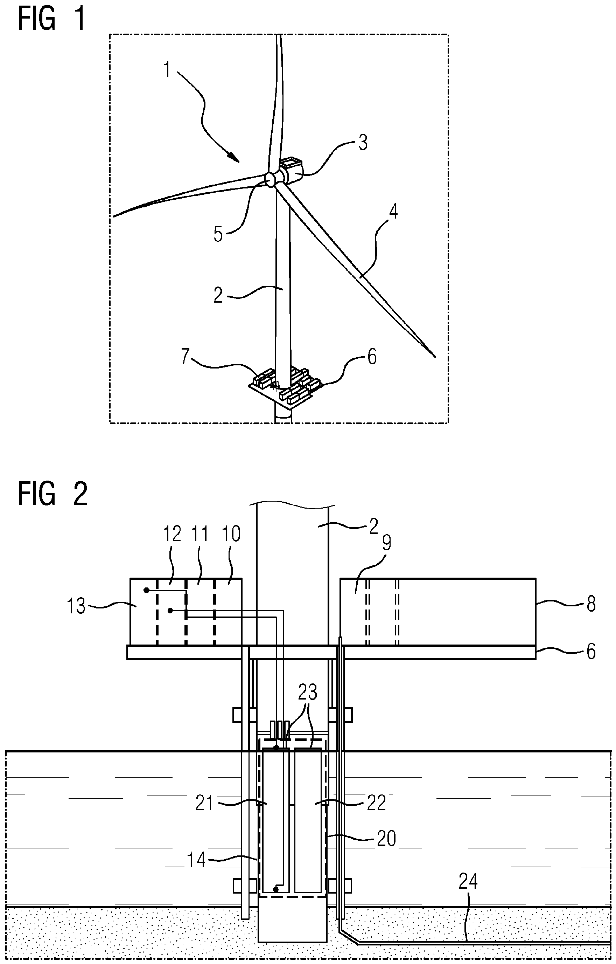

Figure 1 shows an embodiment wind turbine 1 positioned offshore in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4. The wind rotor 5 is rotatable around a longitudinal rotation axis. The wind turbine 1 comprises an electric generator.

In the illustrated embodiment a platform 10 is positioned at the tower 2. The position of the platform 10 at the tower 2 could be such that it is generally above water despite waves and tides.

The platform 6 is adapted for plants comprising operational parts. These could be positioned within containers 7 positioned and optionally fixed on the platform 6 surface. In a non-exclusive manner the containers 7 thus could comprise operational parts such as electrolyzers 8 for a hydrogen production plant, but could be other systems e.g., CO2 extraction machines. In the following the operational parts (in containers or positioned elsewhere) are exampled as being hydrogen producing plants.

Figure 2 shows an embodiment of the present invention illustrating the lower part of the tower 2 mounted on a fundament.

Further illustrated is the platform 6 comprising operational parts, such as electrolyzers 8 and other associated and required devices like e.g. a gas treatment system 9, a water treatment System 10, energy back-up System 11, DOHP system control and SCADA 12, project specific features and equipment 13, sea water intake 14 to feed the system with water etc.

Included is further a heat storage 20 adapted to store heat, or thermal energy, and may be formed as an isolated tank. In one embodiment, the thermal energy is stored in the form of a hot, or thermal carrying, liquid like water. In the present context heat in general, or in the example of hot water, refers to having a higher temperature than the ambient temperature and the e.g. ocean water. Its temperature further may be at least at the level of an operational temperature of the e.g. electrolyzers 8, such as a defined level or a level ensuring a given efficiency or required temperature of process water.

The heat storage tank 20 may comprise multiple individual heat storage tanks 21, 22, where two are shown in the figure.

At the top, the heat storage 20, and optional individual heat storage tanks 21, 22, are formed with heat storage (tank) tops 23 that can be opened for cleaning or inspection purposes.

Electrolyzers producing e.g. hydrogen usually generate a significant amount of heat, and thus need to be cooled, and for this purpose the system of the present invention includes a heat transferring system. This could include passive means like heat sinks, or active gas or liquid transportation adapted to remove the generated excess heat. The figure illustrates an embodiment including a piping 24 to pump excess heat from the e.g. electrolyzers 8 (and / or other devices in the system) away and as illustrated into the sea bead where part of the piping 24 is buried. The seabed distributes the heat in an even distribution in the environment. This avoids marine growth on the pipe 24.

In addition to the parts and features adapted for heat exchanging with the e.g. electrolyzers 8, the heat transferring system also includes the heat reservoir 20, 21, 22.

The media for the heat transportation in the pipe 24 could be water (for example Sweetwater with no organism) or potentially glycol or any other suitable fluid. One advantage by using water is it avoids any risk of pollution by leaks in the heat reservoir 20, 21, 22. This is especially relevant when are installed within the ocean water.

In the present invention, rather than expelling the excess heat as waste heat, at least a (possible controllable) fraction is by any suitable means directed to the heat storage 20, 21, 22. This could be by the piping 24 being connected to the heat storage 20, 21, 22, such as to each of the individual tanks 21, 22, by a controllable connection, such as a valve. The valve could be controlled by a controller and/or actuator of any kind e.g. automatically by wireless or wired means. Alternatively, it could be manually operated.

Thermal energy may be stored within heat storage 20, 21, 22 in any form, and may simply be the e.g. heat transferring fluid circulated to cool the electrolyzers 8 during operation.

In general, the state of operation where heat, or thermal energy, is transferred from the e.g. electrolyzers 8 to the heat storage 20, 21, 22 is referred to as the heat transferring system being operated in a cooling state.

The idea of the present invention in its basic is to store excess heat from the plants like electrolyzers 8 and use it to control the temperature in the heat storage 20, 21, 22.

In one embodiment the heat transferring fluid constantly be passing the heat storage 20, 21, 22 at a regulated rate during operation of the e.g. electrolyzers 8. Temperature sensors could be installed to measure temperature(s) within the heat storage 20, 21, 22 and control the transfer of thermal energy to the heat reservoir 20, 21, 22 to maintain the temperature(s) within given ranges, such as by controlling the flow of heat transferring fluid to (and from) the thermal reservoir 20, 21, 22. In an additional, or alternative, embodiment, if the temperature drops below a given minimum threshold then more thermal energy is directed to the heat storage tanks 20, 21, 22 until a given temperature is reached.

In general, the excess heat from the electrolyzers 8 may be feed to the heat storage 20, 21, 22 at their bottoms, or lower section since heat tends to flow upwards. In the same manner, when heat is to be extracted e.g. to maintain electrolyzers 8 temperature during standby, it could be extracted from the top, or upper part, of the heat storage 20, 21, 22.

The heat storage 20, 21, 22 as illustrated may be positioned within the foundation of the tower 2 as illustrated, and/or within the tower 2 itself. In one embodiment it is positioned in e.g. the ocean water such that it more or less floats. This offers a suitable position such as due to the weight of the heat storage 20, 21, 22 and frees up space.

The heat storage 20, 21, 22 may further be formed as or positioned inside insulated tanks keep the heat storage media hot over a long standby period.

The temperature may be in the range of 40-90 degrees, or 50-80 degrees, or about 60-70 degrees or about 60 degrees.

In the periods where sufficient power is available the heat transferring system thus runs in the cooling state, where the operational parts are actively operating. In this state it is expected the temperature(s) in the heat storage 20, 21, 22 is lower than the temperature of the operational parts.

During a standby period, to increase the readiness of the electrolyzers 8, auxiliaries, process water etc., and possible to avoid freezing during cold periods, it is most efficient to maintain the system at an operational temperature, which during operation.

During such periods, the present invention introduces a heating state where thermal energy, or heat, is transferred from the heat storage 20, 21, 22 to the operational parts (like electrolyzers 8, and optionally other relevant devices parts of the system, like 9-13 and any auxiliaries, to maintain a given minimum temperature.

In one embodiment this is achieved by reversing the cooling means of the electrolyzer 8 (the cooling state). For example, if during operational state of the electrolyzers 8 is circulated to remove excess heat, in the standby, a heating state is introduced where the stored thermal energy in the heat storage 20, 21, 22 is directed to the e.g. electrolyzer 8 and other devices and auxiliaries by the heat transferring fluid.

In one embodiment, in the heating state the heat transferring fluid is simply used to heat rather than to cool. A small power supply such as a battery would still be needed for this operation, however the needed power is be significantly lower as the heat is already available, thus enabling the installation of a significantly smaller battery.

Thus, in some embodiments, in the heating state of the heat transferring system, the heat from the heat storage 20, 21, 22 is be used to keep the operational parts, equipment 9-13 and/or other auxiliaries in operating temperature over a long period without other energy than e.g. circulation pump etc. (with a low consumption for standby).

This enables keeping any such devices above freezing temperature, supply radiators in containers 7 with heat, to supply heat to fans for ventilation, etc.

In addition, using process water as the heating media, or keep the process water at a given temperature by the heating media within the heat storage 20, 21, 22, further enables the reduction of the start-up time.

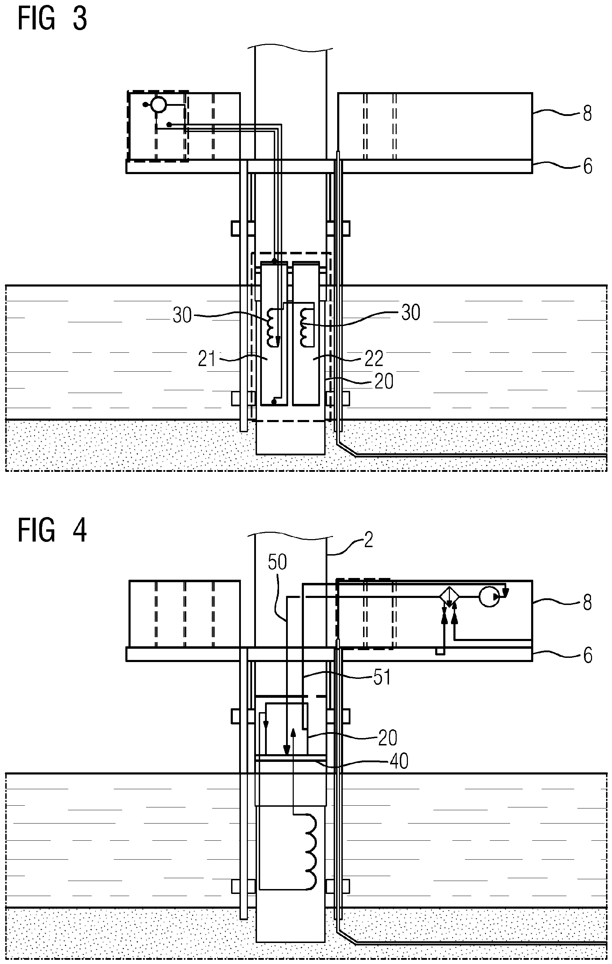

Figure 3 illustrates an embodiment similar to figure 2, but where boilers 30 are installed within the heat storage 20, 21, 22, such as within each of the individual tanks 21, 22.

This enables maintaining the temperature of the heat storage 20, 21, 22 within a given range. This is particularly relevant if stand-by states are expected for substantial periods of time, to maintain heat storages 20, 21, 22 within desired temperatures.

Figure 4 illustrates an embodiment where the heat storage tank 20 is installed on an airtight deck 40 below the platform 6, but possible within the tower 2 or tower 2 foundation, and possible above water level (at a substantially dry position).

Below the airtight deck 40 and submersed into the ocean water is a heat exchanger 41, such as in the form of a pipe spiral in the foundation.

If the temperature in the heat storage 20 becomes too high, such as reaches a threshold temperature, heat is directed from an upper part of the heat storage 20 to the heat exchanger 41. In the heat exchanger 41 it is cooled and then directed back to the heat storage 20 at a lower section.

Having ocean water within the foundation, or at least in thermal contact with the heat exchanger 41, heat may thus be exchanged with the ocean, using this as a cooling 'reservoir' .

The figure further illustrates systems of pipes 50, 51 forming part of the heat transferring system according to embodiments. One system of pipes 50 connected to the lower part of the heat storage 20 and the other system of pipes 51 is connected at an upper or middle part of the heat storage 20.

In cooling state heat, or thermal energy, then is transferred to the heat storage 20 by the system of pipes 50 connected to the lower part.

In heating state heat, or thermal energy, then is extracted from the system of pipes 51 connected to the upper or middle part.

The system of this embodiment is adapted to ensure a maximum temperature in the heat reservoir 20, still maintaining the temperature within a given range.

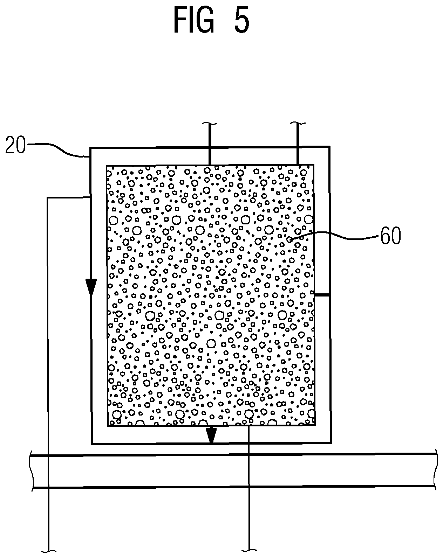

Figure 5 illustrates an embodiment relevant to any of the previous embodiments, where the heat storage 20, 21, 22 includes solid materials 60 with a high capacity to maintain thermal energy for a substantial period, e.g. in the form of pebbles, granules, etc. A heat transferring fluid then may be circulated to the operational parts, and thus passes the materials 60 to give off thermal energy (respectively collect thermal energy).

## Claims

1. A system comprising a wind turbine 1 powering an operational part 8 producing excess heat when operating, wherein the system further includes a heat transferring system comprising a heat storage 20, 21, 22 in heat exchange connection to the operational part 8, and adapted to store at least a part of the excess heat produced by the operational part 8 as thermal energy in a cooling state of the heat transferring system, and to direct the thermal energy to the heat transferring system to heat the operational part 8 in a heating state when the operational part 8 is in standby.

2. A system according to claim 1, wherein the heat storage 20, 21, 22 is positioned within the foundation of the tower 2 and/or within the tower 2 itself.

3. A system according to claim 1 or 2, wherein the heat storage 20, 21, 22 is at least partly positioned in or in contact with the ocean water.

4. A system according to claim 1, 2 or 3, wherein the heat transfer is accomplished through the circulation of a heat transferring fluid at least coming in heat exchange contact with the heat storage 20, 21, 22 and operational parts 8.

5. A system according to any of the preceding claims, wherein the heat storage 20 comprises multiple individual heat storage tanks 21, 22.

6. A system according to any of the preceding claims, wherein the heat storage 20, 21, 22 is positioned fully or at least partly submersed in water.

7. A system according to any of the preceding claims, wherein the heat storage 20, 21, 22 comprises a media within to store thermal energy, such as a liquid like water, solid materials 60 with a high capacity to maintain thermal energy for a substantial period, e.g. in the form of pebbles, granules, etc.

8. Method to control the temperature of operational parts 8 powered by a wind turbine 1, wherein the method includes to control a heat transferring system in a cooling state where excess heat is transferred via the heat transferring system from the operational parts 8 to a heating storage 20, 21, 22 when the operational parts 8 are in operational state, and when the operational parts 8 are in standby, via the heat transferring system use stored thermal energy in the heat storage 20, 21, 22 to heat the operational parts 8 in a heating state.

9. The method according to claim 1 operated on the system according to any of the claims 1-8.

10. A system or method according to any of the preceding claims, wherein the operational parts are electrolyzers 8 for hydrogen production.

11. A system or method according to any of the preceding claims, wherein the wind turbine 1 is positioned offshore, and/or is not connected to the grid.

12. A system comprising a wind turbine 1 powering an operational part 8 producing excess heat when operating, wherein the system further includes a heat transferring system in heat exchange connection to the operational part 8 and adapted to transport thermal energy from the operational part 8 to a heat exchanger 41 submersed in the water.

13. System according to claim 12, wherein a heat storage 20 is installed on an airtight deck 40 below the platform 6, within the tower 2 or tower 2 foundation to store at least a part of the excess heat produced by the operational part 8 as thermal energy in a cooling state of the heat transferring system, and to direct the thermal energy to the heat transferring system to heat the operational part 8 in a heating state when the operational part 8 is in standby, and where the heat transferring system further connects the heat storage 20 to the heat exchanger 41 to regulate the temperature within the heat storage 20.

14. System according to claim 12 or 13 further comprising the features of any of claims 1-7 and/or operating according to the method of any of claims 8-11.
